# EUROPÄISCHE PATENTSCHRIFT

(11) **EP 1 050 693 B1**
(45) Veröffentlichungstag und Bekanntmachung des Hinweises auf die Patenterteilung: **13.07.2005**
(21) Anmeldenummer: 99810388.1
(22) Anmeldetag: 05.05.1999
(51) Int. Cl.: F16C 7/06, F16B 39/12, F16B 33/00, F01D 25/28

(54) **Gelenkstütze für Turbinengehäuse**
Push rod for turbine housing
Tige poussoir pour carter de turbine

(43) Veröffentlichungstag der Anmeldung: 08.11.2000
(73) Patentinhaber: ALSTOM Technology Ltd, 5400 Baden (CH)
(72) Erfinder: Brühwiler, Eduard, 5300 Turgi (CH)

(56) Entgegenhaltungen:
- EP-A- 0 463 337
- EP-A- 0 488 848
- DE-C- 393 662
- DE-U- 9 110 805
- FR-A- 2 260 021
- FR-A- 2 757 227
- GB-A- 2 144 819
- US-A- 3 415 324

## Beschreibung

### Technisches Gebiet

Die Erfindung betrifft Gelenkstützen für Turbinengehäuse bestehend aus einem Mittel- oder Stützenteil, zwei Verbindungsstücken und zwei Gelenkköpfen, die mit dem Turbinengehäuse beziehungsweise einem Gegenlager am Boden verbunden sind. Die Erfindung betrifft die Schraubverbindungen des Mittelteils mit den zwei Verbindungsstücken und insbesondere zwei Sicherungsmuttern zwecks Vermeidung eines Lösens dieser Schraubverbindungen.

### Stand der Technik

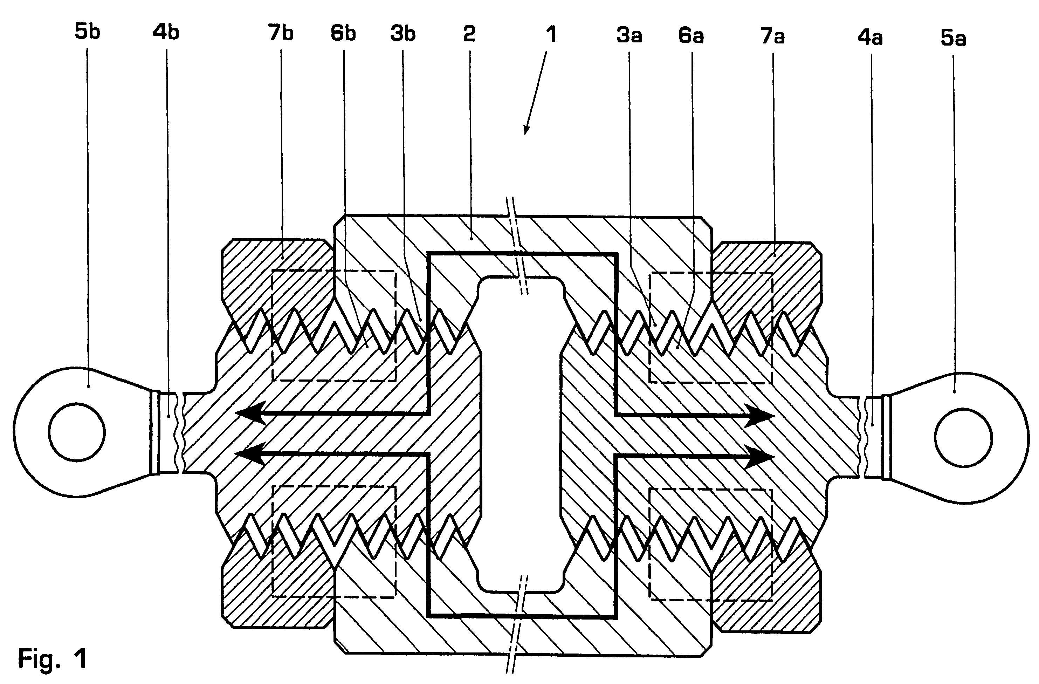

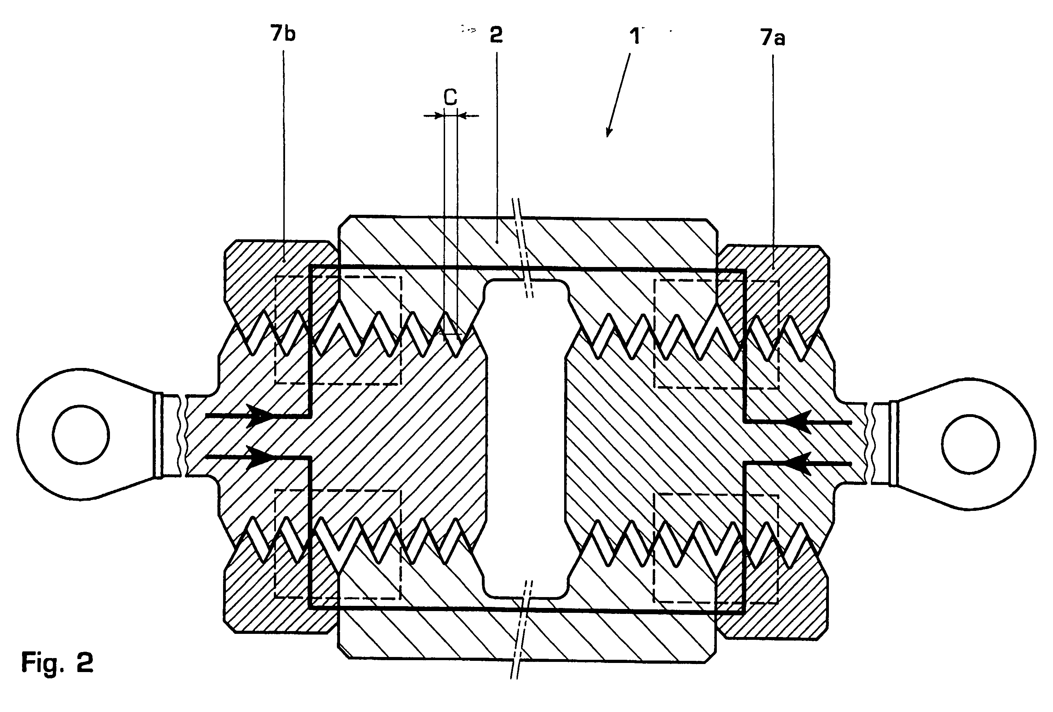

Gelenkstützen dieser Art, auch Gelenkstreben genannt, weisen an den Enden ihres Mittelteils je ein Hauptgewinde auf, welches mit den Verbindungsstücken über ein Rechts- bzw. Linksgewinde verbunden ist. Zwei Kontermuttern sind jeweils beidseits des Mittelteils angeordnet und haben die Funktion, durch ein Verspannen der Gewinde das Gewindespiel zwischen Mittelteil und Verbindungsstücken aufzuheben. Dadurch ist die Schraubverbindung gegen ein Lösen gesichert, wobei Relativbewegungen und ein Ausschlagen des Gewindes, das bei Wechselbeanspruchungen und schwellender Beanspruchung entstehen kann, verhindert sind.
Solche Gelenkstützen können entweder auf Zug oder auf Druck belastet werden. Zwischen diesen beiden Fällen wird insbesondere bei der Betrachtung des Kraftverlaufs durch die Gelenkstütze unterschieden. Sie sind in den Figuren 1 und 2 dargestellt und hier näher erläutert und gehören zum allgemeinen Stand der Technik.

Die Figur 1 zeigt eine auf Zug belastete Gelenkstütze 1 bestehend aus einem Mittelteil 2 mit Hauptgewinden 3a, 3b und zwei Verbindungsstücken 4a, 4b, an deren Enden jeweils Gelenkköpfe 5a, 5b angeordnet sind. Die Verbindungsstücke 4a, 4b sind mit dem Mittelteil 2 über ihre Rechts- bzw. Linksgewinde 6a, 6b verschraubt. Die Schraubverbindungen sind durch Kontermuttern 7a und 7b vor dem Lösen gesichert.
Die Pfeile zeigen den Verlauf des Kraftflusses aufgrund der Zugbelastung durch den Mittelteil 2 und die Verbindungsstücke 4a und 4b an. Bei auf Zug belasteten Gelenkstützen verläuft die Zugkraft jeweils durch das Hauptgewinde des Mittelteils. Die Nebenkraft, die durch das Anziehen der Kontermutter hervorgerufen wird, ist gestrichelt dargestellt.
Die Kontermuttern 7a und 7b verhindern ein Lösen der Schraubverbindung innerhalb der Gewindetoleranz, indem sie das Gewindespiel zwischen den Hauptgewinden 3a, 3b und den Gewinden 6a, 6b der Verbindungsstücke 4a, 4b aufheben und eine minimale, notwendige Pressung im Gewinde bewirken. Sie erfüllen dabei ihre Funktion ohne durch die Zugkraft belastet zu werden.

Figur 2 zeigt die gleiche Gelenkstütze 1 wie in Figur 1, wobei diese hier jedoch auf Druck belastet ist. Die Pfeile zeigen hier den Verlauf des Kraftflusses im Fall einer Druckbelastung der Stütze wie zum Beispiel im Einsatz als Stütze eines Turbinengehäuses. Der Kraftfluss verläuft hier durch die Kontermuttern 7a, 7b, sodass diese mehr belastet sind als die Hauptgewinde des Stützenteils 2. Die Hauptgewinde sind dabei lediglich durch die gestrichelt dargestellte Vorspannung der Kontermuttern belastet, während die gesamte Druckkraft des Turbinengehäuses durch die Gewinde der Kontermuttern verläuft. Dies ist insbesondere bei hohen Belastungen ein Nachteil. In der Anwendung einer Turbinenstütze besteht eine ruhende Gewichtsbelastung von beispielsweise einigen Tonnen bis zu 100 Tonnen. Es ist dabei nur in Notfällen mit einem Wechsel auf Zugkraft zu rechnen. Führt jedoch eine dauernde Druckkraft über die Kontermuttern, würde dies bedeuten, dass die Gewinde der Kontermuttern grösser sein müssten als die Hauptgewinde. Zudem ist es bei solch grossen Belastungen und dadurch grossen Gewinden in der Praxis nur schwer möglich, die Kontermuttern 7a, 7b mit entsprechend grossen Werkzeugen anzuziehen.

Beim Einsatz als Stütze für ein Turbinengehäuse ergibt sich zusätzlich das Problem der dort notwendigen, sehr genauen Höheneinstellung, das heisst der Einstellung der Stützenlänge mittels des Rechts- und Linksgewindes. Würden die Kontermuttern nach erfolgter Höheneinstellung voll angezogen werden, würde das Gewindespiel aufgehoben und dabei der Abstand zwischen den Gelenkköpfen 5a und 5b um das Zweifache des Gewindespiels c verlängert werden. Da das Gewindespiel c aufgrund der Toleranzen nicht genau bekannt ist, würde die Höheneinstellung nach dem Anziehen der Kontermuttern nicht mehr genau stimmen. Der Vorgang der Höheneinstellung müsste deswegen mehrmals wiederholt werden, indem die Kontermuttern mehrmals angezogen und wieder gelöst werden bis die Höheneinstellung dem gewünschten Wert entspricht. In der Praxis hingegen, wird bei der Höheneinstellung bei solchen Gelenkstützen zunächst die Höhe bei entlasteter Stütze durch Drehen der Stütze oder Mittelteils selbst eingestellt. Nach Belastung der Stütze und Nachmessen der Höhe werden die Kontermuttern so gut wie möglich angezogen. Dabei wird aber das Gewindespiel nicht aufgehoben. Das Gewinde wird also nicht verspannt, und die Kontermuttern erfüllen ihre zugeordnete Funktion des Sicherns der Verbindung nicht. In der Anwendung der Druckbelastung von einigen bis zu 100 Tonnen und mehr sind die Kontermuttern nicht nur schwer betätigbar, sondern können in der Praxis fast oder gar nicht angezogen werden. Die Kontermuttern einer Gelenkstütze in dieser Anwendung können also ihre Funktion der Verhinderung eines Lösens der Schraubverbindungen gar nicht erfüllen und sind deshalb nicht gut geeignet.

### Darstellung der Erfindung

Aus den aufgeführten Nachteilen der auf grossen Druck belasteten Gelenkstützen für Turbinengehäuse ist es die Aufgabe der Erfindung, eine Gelenkstütze für Turbinengehäuse mit einem Mittelteil und zwei Verbindungsstücken zu schaffen, wobei die Länge der Gelenkstütze durch die Einstellung der Rechts- bzw. Linksgewinde zwischen dem Mittelteil und den Verbindungsstücken verändert werden kann. Insbesondere soll die Gelenkstütze Sicherungsmuttern zur Vermeidung eines Losdrehens der Schraubverbindungen des Mittelteils mit den Verbindungsstücken aufweisen, welche die Druckkraft des Turbinengehäuses nicht übertragen und zugleich die Funktion des Aufhebens des Gewindespiels erfüllen können. Weiter sollen durch die Erfindung die Sicherungsmuttern mit einfachen Werkzeugen betätigbar und die Höheneinstellung für die Turbine durch Längeneinstellung der Gelenkstütze mittels des Rechts- und Linksgewindes besser ermöglicht sein.

Diese Aufgabe wird durch eine Gelenkstütze gemäss Anspruch 1 gelöst. Eine Gelenkstütze für die Stützung eines Turbinengehäuses weist einen Mittel- oder Stützenteil auf mit einem Hauptgewinde an jedem seiner Enden und beidseits des Mittelteils ein Verbindungsstück mit jeweils einem Gelenkkopf, die mit dem Turbinengehäuse beziehungsweise einem am Boden angeordneten Gegenlager verbunden sind. Die zwei Verbindungsstücke weisen ein Rechts- bzw. ein Linksgewinde auf und sind jeweils mit den Hauptgewinden des Mittelteils verschraubt. Ferner ist an jedem Gewinde der Verbindungsstücke eine Mutter zur Sicherung der Schraubverbindung angeordnet.
Die Gelenkstütze zeichnet sich gemäss der Erfindung insbesondere durch diese zwei Sicherungsmuttern aus, welche Mittel zur Erzeugung einer Klemmwirkung auf die Verbindungsstücke in der Richtung zum Mittelteil aufweisen, wobei diese Mittel zur Klemmwirkung von den Hauptgewinden des Mittelteils beabstandet sind. Die Mittel zur Erzeugung der Klemmwirkung sind mit dem Mittelteil mittels Schraubverbindungen oder Gewinden verbunden, sodass die Klemmkraft im Hauptgewinde in der gleichen Richtung verläuft wie die Druckkraft des Turbinengehäuses und damit das Gewindespiel des Hauptgewindes stets auf jener Flanke des Hauptgewindes liegt, die zur Mitte der Gelenkstütze hinweist.
Durch die Beabstandung der Mittel für die Klemmwirkung vom Mittelteil verläuft die Druckkraft des Turbinengehäuses nunmehr durch die Hauptgewinde und nicht durch die Sicherungsmuttern.

Die erfindungsgemässe Gelenkstütze weist anstelle der zwei Kontermuttern, die im Stand der Technik direkt dem Mittelteil anliegen und auf diesen pressen, zwei Sicherungsmuttern mit Klemmwirkung beidseits des Mittelteils der Gelenkstütze auf, die jeweils vom Mittelteil beabstandet sind.

Die Klemmwirkung wird durch ein Anziehen der Sicherungsmuttern erzielt, indem diese in Richtung des Mittelteils bewegt werden. Dabei wird das Gewindespiel zwischen den Hauptgewinden am Mittelteil und den Gewinden an den Verbindungsstücken aufgehoben. Das Gewinde ist dann auch ohne Druckkraft des Turbinengehäuses festgeklemmt.

In einer ersten Ausführung der Erfindung bestehen die Sicherungsmuttern aus Muttern mit einfachem Gewinde, welche auf dem Gewinde des Gelenkkopfes aufgeschraubt sind und jeweils durch mehrere Schrauben mit dem Mittelteil verbunden sind. Diese Sicherungsmuttern werden durch die mehreren Schrauben betätigt, wobei durch das Anziehen der Schrauben die Muttern in Richtung der Mittelteile und die Mittelteile in Richtung der Gelenkköpfe gezogen werden. Dabei wird die Klemmwirkung auf die Verbindungsstücke erzielt.

Die erfindungsgemässen Sicherungsmuttern erfüllen die Funktion der Sicherung der Schraubverbindung der Gelenkstützenteile. Dies wird dadurch ermöglicht, indem die Kraftrichtung zwischen Sicherungsmutter und Hauptgewinde des Mittelteils im Vergleich zur Gelenkstütze des Standes der Technik, umgekehrt ist. Das heisst, bei diesen auf Druck belasteten Gelenkstützen verläuft der Kraftfluss der Druckkraft durch das Hauptgewinde während die Sicherungsmutter auf Zug belastet ist. Die Sicherungsmuttern ist also von der hohen Druckbelastung der Turbine befreit und erfährt nur die Zugkraft aufgrund der Vorspannung der Verbindungsschrauben.

In einer zweiten und dritten Ausführung der Erfindung bestehen die Sicherungsmuttern aus Überwurfmuttern mit jeweils einem Überwurfteil, welcher die Klemmwirkung auf die Verbindungsstücke ausübt. Die Überwurfmuttern weisen ein Gewinde auf, das mit einem Gewinde an der Aussenseite des Mittelteils verschraubt ist und wodurch die Überwurfmutter in Richtung Mittelteil bewegt und der Mittelteil in Richtung der Gelenkköpfe gezogen wird.
In der zweiten Ausführung liegt jeweils der Überwurfteil auf einem Absatz am Verbindungsstück, worauf die Klemmwirkung ausgeübt wird. In der dritten Ausführung weist jeweils der Überwurfteil ein zweites Gewinde auf, das mit den Verbindungsstücken verschraubt ist und wodurch die Klemmwirkung erzielt wird.

Die Betätigung der Sicherungsmuttern der ersten Ausführung erfolgt durch Drehen derselben bis zu einem minimalen Abstand zum Mittelteil und durch anschliessendes Anziehen der mehreren Schrauben oder Verbindungsschrauben, wobei herkömmliche Schlüssel von kleiner Grösse verwendet werden können. Werkzeuge wie Gabelschlüssel in Spezialgrössen, die für das Anziehen der auf Druck belasteten Gelenkstützen des Standes der Technik eingesetzt werden, sind nicht mehr notwendig. Dadurch ist das Anziehen der Sicherungsmuttern auch auf kleinerem Raum möglich. Ferner ist durch die Verwendung von kleinen Drehmomentschlüsseln eine genauere Vorspannung der Sicherungsmuttern ermöglicht.
Bei der zweiten und dritten Ausführung werden die Überwurfmuttern durch Drehen angezogen, wobei grosse Schlüssel notwendig sind. Im Vergleich zum stand der Technik muss jedoch eine kleinere Kraft aufgewendet werden, da nur die Klemmwirkung erzeugt werden muss.

Die erfindungsgemässen Sicherungsmuttern gewährleisten schliesslich eine Einstellung der Höhe des Turbinengehäuses mittels der Gelenkstütze bevor die Sicherungsmuttern angezogen werden. Beim Anziehen der Verbindungsschrauben oder der Überwurfmuttern wird das Gewindespiel aufgehoben, die Höheneinstellung der Turbine, das heisst die Gelenkstutzenlänge, wird aber nicht mehr verändert, sodass also die Toleranz des Gewindespiels bei der Höheneinstellung keine Rolle mehr spielt.

Sollten in einem Betriebs-Notfall trotzdem einmal Zugkräfte in der Gelenkstütze auftreten, übernehmen bis zu einer gewissen Grösse die Verbindungsschrauben oder die Überwurfmuttern diese Zugkraft. Sollte diese Kraft für die Verbindungsstücke zu gross sein, wird diese unabsichtliche Zugkraft nach einer Bewegung von der Grösse des Gewindespiels vom Hauptgewinde übernommen. Die Verbindungsschrauben und Sicherungsmuttern wirken in diesem Fall als Dämpfer.

### Kurze Beschreibung der Zeichnungen

Es zeigen:
Figur 1 eine auf Zug belastete Gelenkstütze gemäss dem Stand der Technik mit einem Mittelteil, zwei Verbindungsstücken und Gelenkteilen mit Kontermuttern zur Fixierung der Schraubverbindung des Mittelteils mit den Verbindungsstücken sowie einer Darstellung des Kraftflusses,
Figur 2 eine Gelenkstütze wie in Figur 1 gemäss dem Stand der Technik, die auf Druck belastet ist, sowie eine Darstellung des Kraftflusses,
Figur 3 eine Hälfte einer ersten Ausführung der erfindungsgemässen, auf Druck belasteten Gelenkstütze mit Sicherungsmutter,
Figur 4 eine Darstellung im Detail der Sicherungsmutter der ersten Ausführung der erfindungsgemässen Gelenkstütze,
Figur 5 eine zweite Ausführung der erfindungsgemässen Gelenkstütze mit einer Sicherungsmutter in der Art einer Überwurfmutter mit einfachem Gewinde,
Figur 6 eine dritte Ausführung der erfindungsgemässen Gelenkstütze mit einer Sicherungsmutter in der Art einer Überwurfmutter mit zwei Gewinden.

### Weg der Ausführung der Erfindung

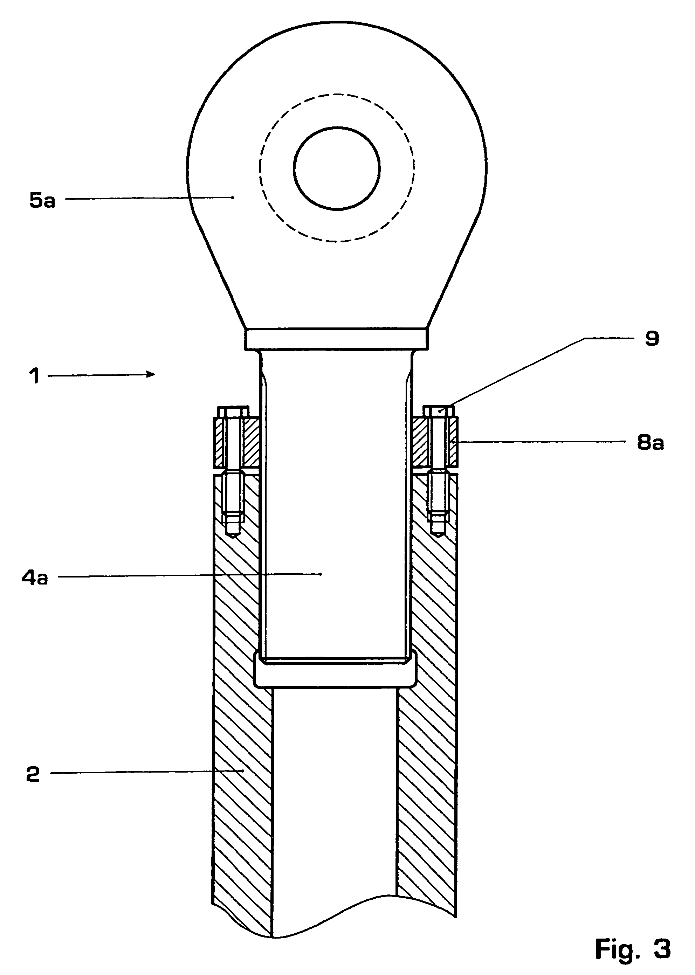

Figur 3 zeigt die eine Hälfte einer erfindungsgemässen Gelenkstütze 1, wovon der Mittelteil 2, ein Verbindungsstück 4a mit Gelenkkopf 5a sowie die erfindungsgemässe Sicherungsmutter 8a mit zwei von mehreren Schrauben 9 dargestellt ist. Das zweite Verbindungsstück der Gelenkstütze mit Sicherungsmutter ist dem ersten ausser der Gewinderichtung identisch und hier nicht gezeigt. Die Sicherungsmutter 8a ist vom Mittelteil 2 der Gelenkstütze 1 beabstandet. Die Schrauben 9 verbinden die Sicherungsmutter 8a mit dem Stützenteil 2. Die Anzahl Schrauben 9 wird dabei nach der notwendigen Sicherungskraft bestimmt. Eine minimale Sicherungskraft wird durch die kleinste im Betrieb auftretende Druckkraft der Gelenkstütze bestimmt, so dass immer eine gewisse Druckkraft im Hauptgewinde vorhanden ist, welche Relativbewegungen der beiden Gewindeteile verhindert und damit auch das Gewinde gegen Lösen oder Verdrehen sichert.

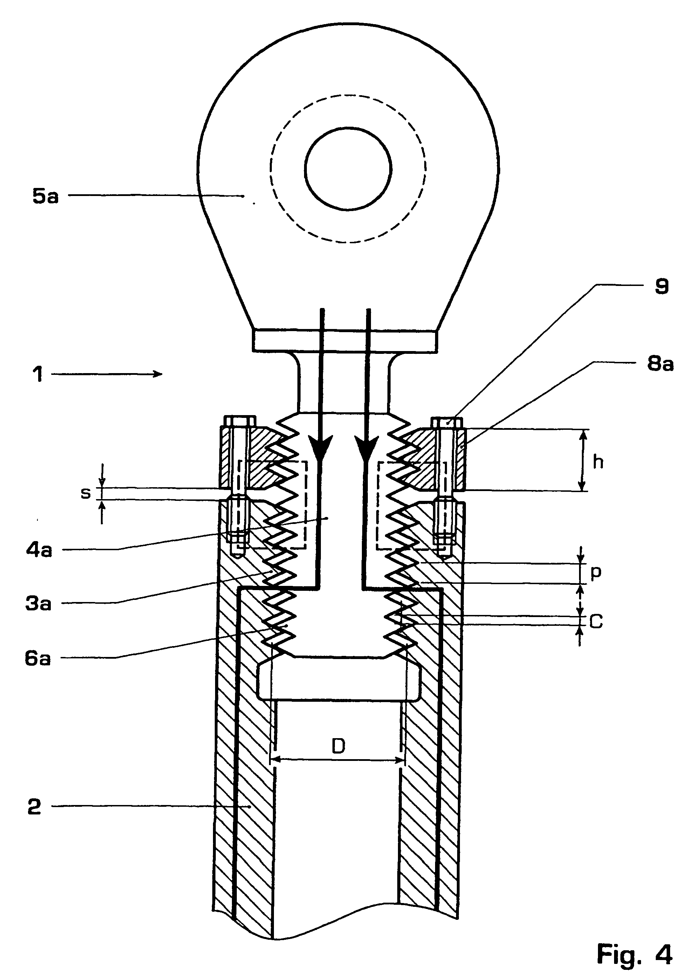

Figur 4 zeigt die Funktionsweise der Sicherungsmutter 8a. Der ausgezogene Pfeil stellt den Verlauf der Druckkraft des Turbinengehäuses durch die Gelenkstütze dar. Die Druckkraft belastet hier das Hauptgewinde 3a des Mittelteils 2 und das Gewinde 6a des Verbindungsstücks 4a. Das Gewindespiel c befindet sich infolge der Druckkraft auf der Unterseite des Gewindeganges vom Hauptgewinde 3a. Durch das Anziehen der Verbindungsschrauben 9 der Sicherungsmutter 8a wird die Druckwirkung auf der aufliegenden Gewindeflanke im Hauptgewinde 3a und im Gewinde 6a unterstützt, das heisst das Gewindespiel c wird nicht verändert und auch nicht auf die andere Seite des Gewindeganges verschoben. Der Kraftverlauf von Verbindungsschraube und Sicherungsmutter ist gestrichelt dargestellt.
Bedingung für die dargestellte Funktion der Sicherungsmutter 8a ist, dass immer ein Abstand s zwischen Sicherungsmutter 8a und Mittelteil 2 vorhanden ist. Dieser Abstand s beträgt vorzugsweise ca. eine Gewindesteigung p und kann sehr einfach durch Drehen der Sicherungsmutter 8a vor dem Montieren der Verbindungsschrauben 9 eingestellt werden. Zur Sicherung werden die Schrauben 9 angezogen, indem sie in Richtung des Mittelteils 2 bewegt werden bis die Sicherungsmutter die gezeigte Position erreicht. In dieser Position ist die Sicherungsmutter 8 auf Zug belastet und erfährt keine Druckbelastung der Turbine. Dies ist insbesondere durch die Beabstandung zwischen Sicherungsmutter und Mittelteil 2 bedingt.

Die Grösse der Sicherungsmutter 8a sowie die Anzahl und Grösse der Verbindungsschrauben 9 hängt von der Grösse der minimal auftretenden Druckkraft ab. Für die Sicherungsmutter wird im allgemeinen eine Höhe h von 0.5 bis 0.8 D genügen, wobei D dem Durchmesser der Gewinde 3a oder 6a entspricht. Die Verbindungsschrauben müssen so ausgewählt werden, dass eine so grosse Vorspannkraft erzeugt werden kann, dass die Reibkraft im Gewinde in jedem Fall grösser als die mögliche Verdrehkraft ist.

Für die Schrauben 9 können Standard-Schrauben verwendet werden, welche mit kleinen Drehmomentschlüsseln mit kleinem Kraftaufwand und auf kleinem Raum angezogen werden können. Grosse Gabelschlüssel oder ähnliche Werkzeuge mit entsprechend grossen Raumerfordernissen für ihre Betätigung sowie der grosse Kraftaufwand für das Anziehen der Mutter werden dadurch vermieden. Durch den Einsatz von mehreren Schrauben auf dem Umfang der Sicherungsmuttern sind diese automatisch auf Verdrehung gesichert.

Durch die Verwendung von kleinen Drehmomentschlüsseln ist eine genauere Vorspannung der Mutter ermöglicht. Die Höheneinstellung der Gelenkstütze kann vor der Belastung durch die Turbine durch Drehen des Stützenteils genau eingestellt werden. Nach der Belastung werden die Sicherungsmuttern angezogen, wobei die Höheneinstellung nicht verändert wird und kein grosser Kraftaufwand notwendig ist.

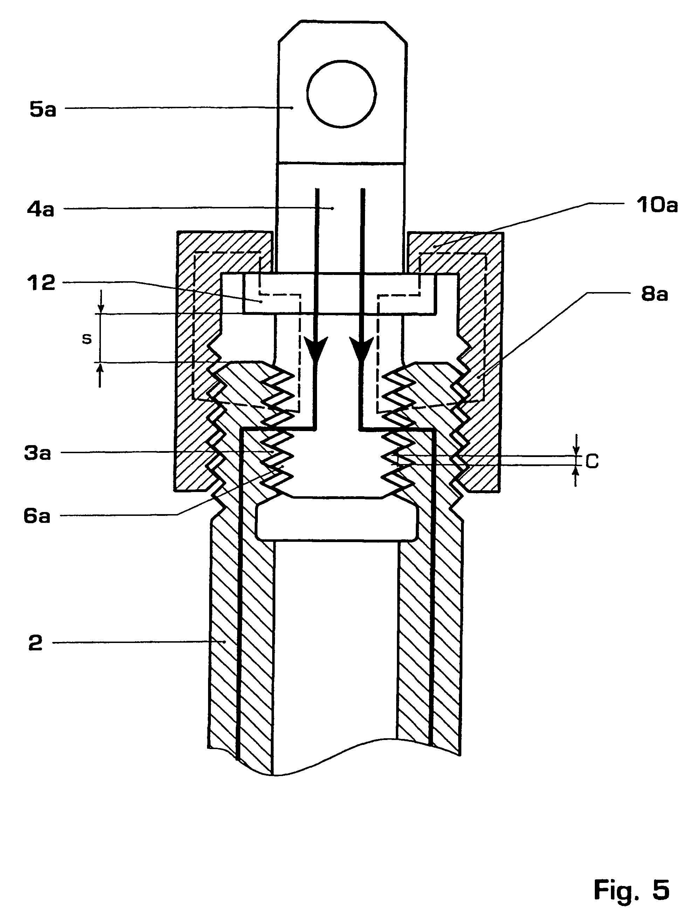

Figur 5 zeigt eine Hälfte einer erfindungsgemässen auf Druck belasteten Gelenkstütze mit einer zweiten Ausführung der Sicherungsmutter. Die Sicherungsmutter, hier eine Überwurfmutter, ist auf Zug aufgrund einer Vorspannung, oder Klemmwirkung, belastet. Diese Ausführung eignet sich für Gelenkstützen mit kleineren Gelenkköpfen 5a, über welche die Überwurfmutter gestreift werden kann. Das Verbindungsstück 4a weist einen Absatz 12 auf, worauf der Überwurfteil 10a der Sicherungsmutter 8a liegt. Der Überwurfteil 10a der Überwurfmutter 8a ist mit dem Mittelteil 2 durch die Verschraubung des Gewindes der Überwurfmutter 8a mit einem Gewinde an der Aussenseite des Mittelteils 2 verbunden. Durch Anziehen dieser Schraubverbindung wird eine Klemmwirkung auf den Absatz 12 erzielt. Der Absatz 12 ist vom Mittelteil 2 beabstandet, sodass in der Überwurfmutter stets Zugkraft wirkt.

Durch Drehen der Überwurfmutter und dessen Bewegung in Richtung des Mittelteils 2, wird eine Klemmwirkung auf den Absatz 12 ausgeübt und dabei der Mittelteil 2 in Richtung des Gelenkkopfes 5a gezogen, sodass das Gewindespiel c zwischen dem Hauptgewinde 3a des Mittelteils 2 und dem Verbindungsstück 4a auf der gleichen Seite des Gewindeganges verbleibt, wie durch die Druckkraft bewirkt. Indem die Klemmwirkung der Sicherungsmutter auf den Absatz 12 des Verbindungsstücks ausgeübt wird und das Gewindespiel c unverändert verbleibt, verläuft die Druckkraft des Turbinengehäuses durch das Hauptgewinde 3a und nicht durch die Überwurfmutter 8a.

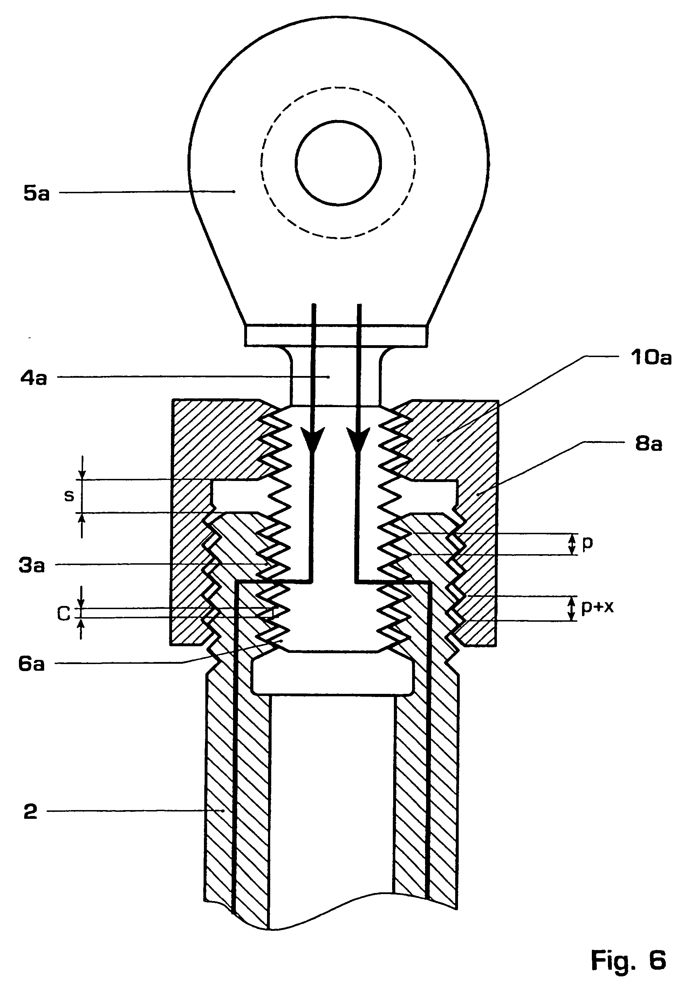

Figur 6 zeigt eine dritte Ausführung der Sicherungsmutter, wobei diese eine Variante der in Figur 5 gezeigten Überwurfmutter ist. Anstelle eines Absatzes für den Überwurfteil der Sicherungsmutter, weist das Verbindungsstück 4a ein verlängertes Gewinde auf, das mit einem zweiten Gewinde am Überwurfteil 10a der Überwurfmutter 8a verbunden ist. Die Überwurfmutter 8a ist wiederum wie in Figur 5 über eine Schraubverbindung an der Aussenseite des Mittelteils mit diesem verbunden. Zur Erzeugung der Klemmwirkung auf das Verbindungsstück 4a ist die Gewindesteigung des Gewindes an der Aussenseite des Mittelteils 2, hier mit p+x bezeichnet, grösser als die Gewindesteigung p des Hauptgewindes 3a an der Innenseite des Mittelteils 2. Die Klemmwirkung bewirkt wiederum, dass der Mittelteil 2 in Richtung des Gelenkkopfes 5a gezogen wird, sodass das Gewindespiel c zwischen dem Hauptgewinde 3a des Mittelteils 2 und dem Verbindungsstück 4a auf der gleichen Seite des Gewindeganges verbleibt, wie durch die Druckkraft bewirkt. Die Druckkraft des Turbinengehäuses verläuft dadurch wie in Figur 5 durch das Hauptgewinde, wobei die Überwurfmutter 8a von dieser Druckkraft entlastet ist.

### Bezugszeichenliste

- 1: Gelenkstütze
- 2: Mittelteil oder Stützenteil
- 3a,3b: Hauptgewinde am Mittelteil
- 4a,4b: Verbindungsstücke
- 5a,5b: Gelenkkopf
- 6a,6b: Gewinde an Verbindungsstücken
- 7a,7b: Kontermuttern gemäss Stand der Technik
- 8a: Sicherungsmutter gemäss Erfindung
- 9: Schrauben, Verbindungsschrauben
- 10a: Überwurfteil der Überwurfmutter
- 12: Absatz
- c: Gewindespiel zwischen Hauptgewinde und Gewinde an Verbindungsstück
- p: Gewindesteigung von Hauptgewinde
- p+x: Gewindesteigung von Gewinde an Aussenseite von Mittelteil
- s: Abstand zwischen Mittelteil und Klemmvorrichtung
- h: Höhe von Mutter zur Klemmwirkung

## Patentansprüche

1. Gelenkstütze (1) zur Stützung eines Turbinengehäuses mit einem Mittelteil (2), zwei jeweils an den Enden des Mittelteils (2) angeordneten Hauptgewinden (3a, 3b), zwei Verbindungsstücken (4a, 4b), die jeweils über ein Gewinde (6a, 6b) mit dem Mittelteil (2) verbunden sind und an ihren Enden je einen Gelenkkopf (5a, 5b) aufweisen, die mit einem am Boden angeordneten Gegenlager und dem Turbinengehäuse verbunden sind,
und mit Sicherungsmuttern (8a) an den Verbindungsstücken (4a, 4b),
**dadurch gekennzeichnet, dass**
die Sicherungsmuttern (8a) Mittel zur Erzeugung einer Klemmwirkung auf die Verbindungsstücke (4a, 4b) aufweisen, wobei diese Mittel vom Mittelteil (2) beabstandet sind,
und diese Mittel zur Erzeugung der Klemmwirkung durch Schraubverbindungen oder Gewinde mit dem Mittelteil (2) verbunden sind,
wobei durch die Klemmwirkung der Mittelteil (2) in Richtung der Gelenkköpfe (5a, 5b) gezogen wird, sodass das Gewindespiel (c) zwischen den Hauptgewinden (3a, 3b) des Mittelteils (2) und den Gewinden (6a, 6b) der Verbindungsstücke (4a, 4b) jeweils auf jener Flanke des Gewindes liegt, die zur Mitte der Gelenkstütze hinweist,
und die Druckkraft des Turbinengehäuses durch die Hauptgewinde (3a, 3b) des Mittelteils (2) verläuft.

2. Gelenkstütze nach Anspruch 1,
**dadurch gekennzeichnet, dass**
die Sicherungsmuttern (8a) jeweils eine Mutter (8a) mit einfachem Gewinde aufweist, das mit dem Gewinde (6a, 6b) der Verbindungsstücke (4a, 4b) verbunden ist,
die Mutter (8a) vom Mittelteil (2) beabstandet ist und durch mehrere Schrauben (9) mit dem Mittelteil (2) verbunden ist,
wobei durch Anziehen der Schrauben (9) die Mutter (8a) in Richtung zum Mittelteil (2) gedrückt und die Klemmwirkung auf die Verbindungsstücke (4a, 4b) erzeugt wird.

3. Gelenkstütze nach Anspruch 1,
**dadurch gekennzeichnet, dass**
die Sicherungsmuttern (8a) jeweils eine Überwurfmutter (8a) mit einem Überwurfteil (10a) aufweisen,
wobei der Überwurfteil (10a) jeweils auf einem Absatz (12) an den Verbindungsstücken (4a, 4b) liegt, wobei der Absatz (12) vom Mittelteil (2) beabstandet ist,
und die Überwurfmutter (8a) jeweils ein Gewinde aufweist, die mit einem Gewinde an der Aussenseite des Mittelteils (2) verbunden ist,
und jeweils durch Drehen der Überwurfmutter (8a) eine Klemmwirkung auf den Absatz (12) ausgeübt wird.

4. Gelenkstütze nach Anspruch 1,
**dadurch gekennzeichnet, dass**
die Sicherungsmuttern (8a) jeweils eine Überwurfmutter (8a) aufweisen mit jeweils einem Überwurfteil (10a) mit einem ersten Gewinde, das mit dem Gewinde (6a, 6b) an den Verbindungsstücken (4a, 4b) verbunden ist, wobei diese Gewindeverbindung vom Mittelteil (2) beabstandet ist,
und die Überwurfmutter (8a) jeweils ein zweites Gewinde aufweist, das mit einem Gewinde an der Aussenseite des Mittelteils (2) verbunden ist,
wobei die Gewindesteigung (p+x) des Gewindes an der Aussenseite des Mittelteils (2) grösser als die Gewindesteigung (p) des Hauptgewindes (3a, 3b) des Mittelteils (2) ist,
und durch Drehen der Überwurfmuttern (8a) eine Klemmwirkung auf die Verbindungsstücke (4a, 4b) ausgeübt wird.

## Claims

1. Articulated support (1) for supporting a turbine housing, having a centre part (2), two main threads (3a, 3b) arranged at the respective ends of the centre part (2), two connecting pieces (4a, 4b) which are connected via a respective thread (6a, 6b) to the centre part (2) and have a respective joint eye (5a, 5b) at their ends, these joint eyes (5a, 5b) being connected to an abutment, arranged on the floor, and to the turbine housing,
and having lock nuts (8a) on the connecting pieces (4a, 4b),
**characterized in that** the lock nuts (8a) have means for producing a clamping effect on the connecting pieces (4a, 4b), these means being at a distance from the centre part (2),
and these means for producing the clamping effect are connected to the centre part (2) by screwed connections or threads,
the centre part (2) being pulled in the direction of the joint eyes (5a, 5b) by the clamping effect, so that the thread backlash (c) between the main threads (3a, 3b) of the centre part (2) and the threads (6a, 6b) of the connecting pieces (4a, 4b) in each case lies on that flank of the thread which points towards the centre of the articulated support,
and the compressive force of the turbine housing runs through the main threads (3a, 3b) of the centre part (2).

2. Articulated support according to Claim 1, **characterized in that** the lock nuts (8a) each have a nut (8a) with a single thread which is connected to the thread (6a, 6b) of the connecting pieces (4a, 4b),
the nut (8a) is at a distance from the centre part (2) and is connected to the centre part (2) by a plurality of screws (9),
the nut (8a) being pressed in the direction of the centre part (2) and the clamping effect on the connecting pieces (4a, 4b) being produced by tightening the screws (9).

3. Articulated support according to Claim 1, **characterized in that** the lock nuts (8a) each have a cap nut (8a) with a cap part (10a),
the cap part (10a) lying on a respective step (12) on the connecting pieces (4a, 4b), the step (12) being at a distance from the centre part (2),
and the cap nut (8a) has a respective thread which is connected to a thread on the outside of the centre part (2),
and a clamping effect is exerted on the step (12) in each case by turning the cap nut (8a).

4. Articulated support according to Claim 1, **characterized in that** the lock nuts (8a) each have a cap nut (8a) with a respective cap part (10a) having a first thread which is connected to the thread (6a, 6b) on the connecting pieces (4a, 4b), this threaded connection being at a distance from the centre part (2),
and the cap nut (8a) has a respective second thread which is connected to a thread on the outside of the centre part (2),
the thread pitch (p+x) of the thread on the outside of the centre part (2) being greater than the thread pitch (p) of the main thread (3a, 3b) of the centre part (2), and a clamping effect is exerted on the connecting pieces (4a, 4b) by turning the cap nuts (8a).

## Revendications

1. Support articulé (1) pour supporter un carter de turbine comprenant une partie centrale (2), deux filetages principaux (3a, 3b) disposés respectivement aux extrémités de la partie centrale (2), deux pièces de liaison (4a, 4b) qui sont reliées chacune par un filetage (6a, 6b) à la partie centrale (2) et qui présentent à leurs extrémités à chaque fois une tête articulée (5a, 5b), qui est connectée à une butée disposée sur le fond et au carter de turbine,
et comprenant des écrous de fixation (8a) sur les pièces de liaison (4a, 4b),
**caractérisé en ce que**
les écrous de fixation (8a) présentent des moyens pour produire un effet de serrage sur les pièces de liaison (4a, 4b), ces moyens étant espacés de la partie centrale (2),
et ces moyens pour produire un effet de serrage étant connectés à la partie centrale (2) par des raccords vissés ou des filetages,
l'effet de serrage provoquant la traction de la partie centrale (2) dans la direction des têtes articulées (5a, 5b), de sorte que le jeu des filetages (c) entre les filetages principaux (3a, 3b) de la partie centrale (2) et les filetages (6a, 6b) des pièces de liaison (4a, 4b) s'applique à chaque fois sur le flanc du filetage qui est tourné vers le centre du support articulé,
et la force de compression du carter de turbine s'étendant à travers les filetages principaux (3a, 3b) de la partie centrale (2).

2. Support articulé selon la revendication 1,
**caractérisé en ce que**
les écrous de fixation (8a) présentent chacun un écrou (8a) avec un filetage simple qui est connecté au filetage (6a, 6b) des pièces de liaison (4a, 4b),
l'écrou (8a) est espacé de la partie centrale (2) et est connecté à la partie centrale (2) par plusieurs vis (9),
le serrage des vis (9) pressant l'écrou (8a) dans la direction de la partie centrale (2) et produisant l'effet de serrage sur les pièces de liaison (4a, 4b).

3. Support articulé selon la revendication 1,
**caractérisé en ce que**
les écrous de fixation (8a) présentent chacun un écrou d'accouplement (8a) avec une partie d'accouplement (10a),
la partie d'accouplement (10a) se trouvant à chaque fois sur un épaulement (12) sur les pièces de liaison (4a, 4b), l'épaulement (12) étant espacé de la partie centrale (2),
et l'écrou d'accouplement (8a) présente à chaque fois un filetage qui est connecté à un filetage sur le côté extérieur de la partie centrale (2),
et à chaque fois un effet de serrage est exercé sur l'épaulement (12) par rotation de l'écrou d'accouplement (8a).

4. Support articulé selon la revendication 1,
**caractérisé en ce que**
les écrous de fixation (8a) présentent chacun un écrou d'accouplement (8a) avec une partie d'accouplement respective (10a) ayant un premier filetage, qui est connecté au filetage (6a, 6b) sur les pièces de liaison (4a, 4b), cette connexion filetée étant espacée de la partie centrale (2),
et l'écrou d'accouplement (8a) présente à chaque fois un deuxième filetage qui est connecté à un filetage sur le côté extérieur de la partie centrale (2),
le pas du filetage (p+x) du filetage sur le côté extérieur de la partie centrale (2) étant supérieur au pas du filetage (p) du filetage principal (3a, 3b) de la partie centrale (2),
et un effet de serrage est exercé sur les pièces de liaison (4a, 4b) par rotation de l'écrou d'accouplement (8a).
